(19) Europäisches Patentamt
European Patent Office
Office européen des brevets

(11) **EP 3 897 197 B1**

(12) **EUROPEAN PATENT SPECIFICATION**

(45) Date of publication and mention
of the grant of the patent:
**14.09.2022 Bulletin 2022/37**

(51) International Patent Classification (IPC):
**A23L 11/00** (2021.01)   **A23P 30/40** (2016.01)
**A47J 43/12** (2006.01)

(21) Application number: **19824359.4**

(52) Cooperative Patent Classification (CPC):
**A23L 11/05; A23P 30/40**

(22) Date of filing: **20.12.2019**

(86) International application number:
**PCT/EP2019/086878**

(87) International publication number:
**WO 2020/128083 (25.06.2020 Gazette 2020/26)**

(54) **AERATED FOOD PRODUCTS AND PROCESSES OF PREPARATION THEREOF**

BELÜFTETE LEBENSMITTELPRODUKTE UND VERFAHREN ZUR HERSTELLUNG DAVON

PRODUITS ALIMENTAIRES AÉRÉS ET LEURS PROCÉDÉS DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2018 EP 18215466**

(43) Date of publication of application:
**27.10.2021 Bulletin 2021/43**

(73) Proprietor: **Société des Produits Nestlé S.A.**
**1800 Vevey (CH)**

(72) Inventors:
• **CHEVALIER, Jean-François**
**14100 Courtonne La Meurdrac (FR)**
• **MARCILLA, Rafael**
**14100 Lisieux (FR)**
• **BARANOVSKY, Victor**
**8551500 Revivim (IL)**
• **GOLDFEDER, Yair**
**10600 Nahalal (IL)**

(74) Representative: **Dinger, Hansjörg**
**Société des Produits Nestlé S.A.**
**Avenue Nestlé 55**
**1800 Vevey (CH)**

(56) References cited:
EP-A1- 2 745 702     WO-A1-2016/062567
WO-A1-2017/147059     WO-A1-2017/211635
US-A1- 2011 020 527     US-A1- 2018 027 854

## Description

### TECHNICAL FIELD

The present invention relates generally to the field of aerated food products. For example, the present invention relates to aerated food products comprising at least one edible plant paste and having an overrun ranging from 7% to 150%.

### BACKGROUND OF THE INVENTION

Pasty or spreadable plant-based food products are available on the market. Hummus, a seasoned chickpea paste, is a well-known example of such food product. Hummus is well-appreciated by consumers and becomes more and more popular with the consumers. It can be consumed as a dipping sauce, a spread, a dressing, a side dish, or even as it is.

However, hummus generally has a high fat content, such as 35wt% of fat, which is not entirely desirable from a nutritional standpoint.

Moreover, few innovations are developed in the hummus category. Most of the innovations for such a product category lie in the taste of the product by using non-regular seasoning ingredients or lie in the visual aspect of the product by providing new colours with naturally coloured food ingredients (e.g. beet). There were some attempts on the market to create new textures in this food category by providing hummus with crunchy inclusions such as pine nuts. Nevertheless, innovations relying on the texture of the hummus remain scarce.

EP 2745702 A1 (Unilever N.V.) relates to an aerated composition containing ground pulse seed and hydrophobin. The ground pulse seed is not the main ingredient. The concentration of ground pulse seed is low and ranges from 0.1% to 10% by weight of the composition. In the examples, pulse flour (e.g. lentil flour) is used as a source of ground pulse seed.

WO 2017/211635 A1 (Conopco inc., D/B/A Unilever) relates to a water-dispersible powder comprising dehulled pulse seed component and a carrier material. Especially, the dehulled pulse seed component is a lentil powder. Especially, the water dispersible powder may be dispersed at a concentration of 10wt% in water and may be whipped to obtain an aerated food product having an overrun of at least 100%.

WO 2017/147059 A1 (The Hershey Company) relates to an edible solid foam including at least one sweetener and at least one proteinaceous whipping agent derived from a plant source. For example, the proteinaceous whipping agent includes an aqueous protein-containing extract of one or more cooked legumes such as aquafaba.

WO 2016/062567 A1 (Conopco Inc, D/B/A Unilever) relates to a food product comprising a lentil-derived foaming agent, especially a lentil flour and that may be aerated to an overrun of at least 15%.

US 2018/027854 relates to a shelf stable hummus food product comprising: chickpeas; tahini; and spices, while US 2011/020527 relates to a hummus paste with long shelf life.

None of the prior art documents disclose an aerated food product comprising a significant amount of an edible plant paste.

It would therefore be desirable to develop aerated pasty or spreadable plant-based food products with a low fat content and providing innovative textures to the consumers.

Any reference to prior art documents in this specification is not to be considered an admission that such prior art is widely known or forms part of the common general knowledge in the field.

### SUMMARY OF THE INVENTION

The object of the present invention is to improve the state of the art, and in particular to provide an aerated food product that overcomes the problems of the prior art and addresses the needs described above, or at least to provide a useful alternative.

The inventors were surprised to see that the object of the present invention could be achieved by the subject matter of the independent claims. The dependent claims further develop the idea of the present invention.

Accordingly, an embodiment of the invention proposes an aerated food product which comprises between 40wt% and 95wt% of at least one edible plant paste and which has an overrun ranging from 7% to 150%, wherein the edible plant paste is not a dry particulate or powder composition. The edible plant paste may be a vegetable paste, such as a pulse paste or an oleaginous paste. For instance, the vegetable paste consists of a mixture of at least one pulse paste and at least one oleaginous vegetable paste. Preferably, the aerated food product remains stable over 30 days at 4°C.

The aerated food product, may further comprise at least one of the following ingredients: an edible oil; a spice, aromatic herb, condiment, flower essence and/or salt; an edible acidic ingredient; an emulsifier.

In an embodiment, the aerated food product has the following nutritional composition: a fat content ranging from 10 vol% to 35vol%, a protein content ranging from 3wt% to 10wt%, a fibre content ranging from 2wt% to 5wt%.

In another embodiment, the invention proposes a process for preparing an aerated food product, which comprises the steps of:

(a) providing between 40wt% and 95wt% of at least one edible plant paste, wherein the edible plant paste is not a dry particulate or powder composition,

(b) whipping the edible plant paste to obtain an aerated food product which has an overrun ranging from 7% to 150%.

In an alternative embodiment, the invention proposes a process for preparing an aerated food product which comprises the steps of:

(a') providing at least one foamable ingredient,

(b') whipping the foamable ingredient to obtain an aerated ingredient,

(c') mixing the aerated ingredient with an edible plant paste to obtain an aerated food product which has an overrun ranging from 7% to 150%.

For instance, the foamable ingredient may be selected from the group consisting of: aquafaba, casein concentrate, casein hydrolysate, casein isolate, milk protein concentrate, milk protein hydrolysate, milk protein isolate, plant protein concentrate, plant protein hydrolysate, plant protein isolate, whey proteins concentrate, whey protein hydrolysate, whey protein isolate, white egg and mixtures thereof.

In these processes, the edible plant paste may be a vegetable paste, such as a pulse paste or an oleaginous paste. For instance, the vegetable paste consists of a mixture of at least one pulse paste and at least one oleaginous vegetable paste.

In yet another embodiment, the invention proposes a multilayer food product, at least one layer of which comprises an aerated food product as mentioned above.

These and other aspects, features and advantages of the invention will become more apparent to those skilled in the art from the detailed description of embodiments of the invention, in connection with the attached drawings.

## DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

As used in the specification, the singular forms "a", "an", and "the" include plural referents unless the context clearly dictates otherwise.

As used in the specification, the term "substantially free" means that no more than 10 weight percent, preferably no more than 5 weight percent, and more preferably no more than 1 weight percent of the excluded material is present. In a preferred embodiment, "substantially free" means that no more than 0.1 weight percent of the excluded material remains. "Entirely free" typically means that at most only trace amount of the excluded material is present, and preferably, no detectable amount is present. Conversely, "substantially all" typically means that at least 90 weight percent, preferably at least 95 weight percent, and more preferably at least 99 weight percent of the material is present.

In the context of the invention, the "overrun" is an indication of the quantity of gas incorporated into a product (e.g. a food product). The overrun (OR) is calculated according to the following equation:

$$ OR = \left(\frac{Po}{Pf}\right) \times 100 - 100 $$

where $Po$ is the weight of a predetermined volume $Vc$ of a product before incorporation of gas, and $Pf$ is the weight of the same volume $Vc$ of the product after incorporation of a gas, for instance by whipping. The weights $Pf$ and $Po$ are measured at the same pressure and temperature.

The term "edible plant" is understood to include fruits and vegetables, both as defined below. Where needed, the distinction between fruits and vegetables will be indicated.

The term "fruits" is used in the current specification in the culinary sense of the word. Fruits are the fleshy seed-associated structures of a plant that are sweet and edible in the raw state, such as apples, oranges, grapes and strawberries. This includes fruits from cultivated varieties of plants which produce seedless fruits such as seedless grapes. The term "fruits" is not used here in the botanical sense. For example, beans, nuts and cereal grains are not considered as fruits in the context of the current invention, while strawberries are considered as fruits in the context of the present invention. Usually, fruits are used in desserts and in sweet preparations, raw or cooked. Examples of fruits include apple, apricot, banana, bilberry, blackberry, blackcurrant, blueberry, boysenberry, cherry, cloudberry, cranberry, damson, date, dragonfruit, durian, elderberry, gooseberry, guava, kiwifruit, lychee, mango, melon, mulberry, nectarine, papaya, peach, pear, persimmon, pineapple, plum, pomegranate, prune, purple mangosteen, raspberry, red currant, star fruit, strawberry, white currant, wolfberry, and mixtures thereof.

The term "vegetables" is understood to refer to edible plants or parts of plants, such as roots, stems, leaves, buds, botanical fruits, and other plant organs. Usually, vegetables are intended for cooking or for eating raw, in savoury or sweet and sour dishes. For avoidance of doubt, vegetables also include edible mushrooms, edible algae, beans, nuts, peanuts, chestnuts, pine nuts and cereal grains. Fruits, i.e. culinary fruits as defined above, are sometimes used as vegetables, for example in sweet and sour dishes or in sauces. Examples of vegetables include almond, artichoke, avocado, asparagus, bean, beetroot, black bean, black-eyed pea, broccoli, brussels sprout, bamboo shoot, cabbage, carrot, cashew, cauliflower, celery, celeriac, Chinese cabbage, chickpea, cucumber, daikon, edible algae, eggplant, chicory, fava bean, fennel, garlic, Jerusalem artichoke, hazelnut, horseradish, kale, leek, lentil, maize, onion, olive, parsnip, pea, peanut, pepper, pine nut, pistachio, pumpkin, potato, sesame seed, sweet potato, radicchio, red bean, chili pepper, rice, romanesco, shallot, soybean, spinach, squash, tomato, turnip, walnut, white bean, zucchini, edible mushrooms such as *Boletus edulis, Cantharellus cibarius, Cantharellus tubaeformis, Pleurotus ostreatus, Amanita caesarea* and mixtures thereof.

The terms "edible plant paste", "vegetable paste", "paste" are understood to mean dried, cooked or non-cooked fruits or vegetables which are crushed, ground or homogenised and which have a pasty flowing consistency allowing their consumption with a fork. It excludes dry particulate or powder compositions, such as fruits flours, fruits powders, vegetable flours and vegetable powders. For avoidance of doubt, it also excludes liquid compositions such as fruit and/or vegetable juices, aqueous protein-containing liquids wherein vegetables have been cooked (e.g aquafaba).

The term "whip" and its derivatives refer to the action of mixing while incorporating a food-grade gas into a food product. Examples of food-grade gases include air, carbon dioxide, nitrogen oxygen and mixtures thereof.

The term "oleaginous vegetable" refers to vegetables having a fat content ranging from 20wt% to 80wt%, a protein content ranging from 7wt% and 25wt%, a fibre content above 7wt% and total solids ranging from 85wt% to 99wt% in the crude state. Examples of oleaginous vegetables include almond, hazelnut, peanut, pistachio, sesame seed and walnut.

The term "pulse" refers to vegetables having a protein content ranging from 20wt% to 40wt%, a fat content below 10wt%, a fibre content above 7wt% and total solids ranging from 85wt% to 99wt% in the crude state. Examples of pulse include black bean, black-eyed pea, chickpea, fava bean, lentil, pea, red bean, soybean and white bean.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

In a first aspect of the invention, the invention relates to an aerated food product which comprises at least one edible plant paste and which has an overrun ranging from 7% to 150%.

In a preferred embodiment, the edible plant paste is a vegetable plant paste. Preferably, the vegetable paste is selected from the group consisting of almond paste, avocado paste, black bean paste, black-eyed pea paste, chickpea paste, dried tomato paste, fava bean paste, hazelnut paste, lentil paste, maize paste, olive paste, pea paste, peanut paste, pistachio paste, red bean paste, sesame seed paste, soybean paste, walnut paste, white bean paste and mixtures thereof. Such vegetables have total solids above 20wt%. Without wishing to be bound by theory, the inventors believe that using vegetables having total solids above 20wt% would ensure that the vegetable paste has a sufficient viscosity to entrap gas bubbles after whipping.

In a more preferred embodiment, the vegetable paste is a pulse paste or an oleaginous vegetable paste. Oleaginous vegetables are preferred due to their high total solids, including high fat content. Similarly, pulses are preferred due to their high total solids, including high protein content. Without wishing to be bound by theory, the inventors believe that the total solids, especially proteins, fibers and/or fats, would provide a good foamability to the food product. Moreover, they believe that the total solids would participate in stabilizing the gas bubbles in the aerated food product. The oleaginous vegetable paste may be selected from the group consisting of almond paste, hazelnut paste, peanut paste, pistachio paste, sesame seed paste, walnut paste and mixtures thereof. The pulse paste may be selected from the group consisting of black bean paste, black-eyed pea paste, chickpea paste, fava bean paste, lentil paste, pea paste, red bean paste, soybean paste, white bean paste, and mixtures thereof. Preferably, the vegetable paste is a pulse paste. More preferably, the vegetable paste is a pulse paste selected from the group consisting of black bean paste, black-eyed pea paste, chickpea paste, fava bean paste, lentil paste, pea paste, red bean paste, soybean paste, white bean paste, and mixtures thereof. Most preferably, the vegetable paste is a chickpea paste.

In an advantageous embodiment, the vegetable paste consists of a mixture of at least one pulse paste and at least one oleaginous vegetable paste. Such a mixture combines the foaming properties of oleaginous vegetable pastes and the foaming properties of pulse pastes to obtain a stable aerated food product. The pulse paste may be selected from the group consisting of black bean paste, black-eyed pea paste, chickpea paste, fava bean paste, lentil paste, pea paste, red bean paste, soybean paste, white bean paste, and mixtures thereof. The oleaginous vegetable paste may be selected from the group consisting of almond paste, hazelnut paste, peanut paste, pistachio paste, sesame seed paste and mixtures thereof. Preferably, the vegetable paste consists of a mixture of at least one pulse paste and a sesame seed paste. More preferably, the vegetable paste consists of a mixture of a chickpea paste and a sesame seed paste.

In an embodiment, the edible plant paste may be a fermented edible plant paste. By "fermented edible plant paste", it is understood an edible plant paste which has been fermented with at least one yeast and/or at least one bacteria. Examples of bacteria include lactic acid bacteria.

In one embodiment, the aerated food product comprises between 40wt% and 95wt% of edible plant paste, preferably 65wt% and 95wt% of edible plant paste. More preferably, the aerated food product comprises between 70wt% and 95wt% of edible plant paste. Most preferably, the aerated food product comprises between 70wt% and 85wt% of edible plant paste. The aerated food product has a significant content of edible plant paste or mainly consists of an edible plant paste. The addition of low amount of foamable plant material (e.g plant-based proteinaceous aqueous liquid, vegetable flour...) into a food product is known in the art to enhance the foamability of the food product. However, the aeration of a food product comprising a significant content (i.e at least 40wt%) of an edible plant paste, especially a pulse/oleaginous vegetable paste, is not known in the art. Especially, it appears difficult to achieve overruns above 7% for such food products having a pasty consistency.

The aerated food product has an overrun ranging from 7% to 150%, preferably ranging from 7% to 100% or from 10% to 100%. More preferably, the overrun of the aerated food ranges from 7% to 85%, from 10% to 85% or from 7% to 60%, from 10% to 60%. Most preferably, the overrun of the aerated food ranges from 7% to 50%, from 10% to 50%, from 7% to 40%, from 10% to 40%, from 7% to 35%, from 10% to 35%, from 7% to 30% or from 10% to 30%. The inventors have discovered that overruns over 7% may be reached for food products comprising an edible plant paste. Such overruns for such food products have never been reached up to now. The overrun of the aerated food product provides a light, unctuous and airy texture to the food product. The aerated food product is less compact than the non-aerated food product and is easily spreadable. Aeration also provides new aromatic profile to the food product by enhancing or lowering certain aromatic notes. Moreover, due to aeration, the fat content per serving having a predetermined volume is lower in the aerated food product than in the non-aerated food product. Therefore, the aerated food product has a better nutritional profile per serving of a given volume (in terms of fat content). For instance, a serving is a spoonful of the aerated product.

In another embodiment, the aerated food product further comprises at least one of the following ingredients:

- an edible oil,
- a spice, aromatic herb, condiment, flower essence and/or salt,
- an edible acidic ingredient,
- an emulsifier.

The aerated food product may comprise at least one edible oil. An edible oil is a liquid composition of plant origin consisting essentially of 100% fat. The edible oil aims at providing a targeted texture and/or a targeted taste to the aerated food product. Examples of edible oil include almond oil, argan oil, avocado oil, coconut oil, grapeseed oil, hot chili pepper paste, hazelnut oil, macadamia nut oil, olive oil, palm oil, peanut oil, pistachio oil, rapeseed oil, rice bran oil, soy oil, sunflower seed oil, walnut oil, wasabi oil and mixtures thereof.

The aerated food product may further comprise at least one spice and/or at least one aromatic herb and/or at least one condiment and/or at least one flower essence and/or salt. These components aim at seasoning the aerated food product and provide a specific aromatic profile to the aerated food product. Examples of spice include aniseed, cardamom, chili pepper, cinnamon, clove, cumin, curry, fenugreek, garlic, grains of paradise, ginger, nutmeg, onion, paprika, pepper, saffron, star anise, sumac, turmeric, vanilla and mixtures thereof. Examples of aromatic herb include balm, basil, chervil, chive, coriander, dill, lemongrass, mint, oregano, parsley, rosemary, sage, savory, sweet bay leaf, tarragon, tea, thyme, verbena and mixtures thereof. Examples of condiment include harissa, ketchup, mayonnaise, mustard, soya sauce, tabasco and mixtures thereof. Examples of flower essence suitable for the invention include jasmine essence, lavender essence, orange blossom essence rose essence, violet essence and mixtures thereof. The identity of the spices and/or aromatic herbs and/or condiments and/or flower essences and their content vary upon the desired taste and the desired taste intensity.

The aerated food product may further comprise at least one edible acidic ingredient. Edible acidic ingredients may be used to provide a fresh and acidic taste to the aerated food product. It may be also used to reach a targeted pH value by decreasing the pH of the aerated food product. The term edible acidic ingredients include raw edible acids and acidic food ingredients. Examples of raw edible acids include citric acid, lactic acid, hydrochloric acid, phosphoric acid, tartaric acid and mixtures thereof. Examples of acidic food ingredient include lemon juice, kiwi juice, tomato juice, grapefruit juice, grapes juice, orange juice, passionfruit juice, pineapple juice, raspberry juice, vinegar and mixtures thereof. The choice of the edible acidic ingredient and its content vary upon the acidifying powder of the edible acidic ingredient, the targeted taste and the targeted pH.

The aerated food product may comprise at least one emulsifier. The emulsifier increases the foamability of the food product to reach a targeted overrun, including high overruns (i.e. overruns over 50%). Examples of emulsifier include sugar esters, polyglycerol fatty acid esters, polyglycerol polyricinoleate (PGPR), polysorbates (polyoxyethylene sorbitan esters), sucroesters monoglycerides, diglycerides, lactic acid esters of mono- and di-glyceride, lecithin and combinations thereof. Preferably, the aerated food product is substantially free of any emulsifier. More preferably, the aerated food product is entirely free of any emulsifier. Indeed, consumers better accept food products without emulsifiers. Such food products without emulsifiers are perceived as "natural",

The aerated food product may further comprise a flavour. The flavour may be an artificial flavour or a non-artificial flavour. In the context of the invention, the term "artificial flavour" refers to a molecule or a combination of molecules, the function of which is to impart flavour, obtained by chemical synthesis. Contrarily, the term "non-artificial flavour" refers to a flavour which is not an artificial flavour. The flavour may be in a form of a liquid or a powder. The flavour content will vary depending upon the type of flavour used and the flavour intensity desired in the aerated food product.

The aerated food product may further comprise at least one sweetening ingredient. The sweetening ingredient may be an artificial or a natural sweetening ingredient. Preferably, the aerated food product comprises a natural sweetening ingredient. Examples of natural sweetening ingredient include sucrose, lactose, honey, thaumatin, all types of glucose syrups or fructose syrups or natural extracts like stevia or rebaudioside A extracts, monk fruit extracts and their combinations. The amount of sweetening ingredients used may vary upon the nature of the sweetener, the desired level of sweetness and the strength of the sweetener.

The aerated food product may comprise at least one edible coloring ingredient. Edible coloring ingredients may be used to provide consumers with an aerated food product exhibiting an attractive visual aspect. The edible coloring ingredients may be a liquid or a powder. The edible coloring ingredients may be an artificial edible coloring ingredient, a natural edible coloring ingredient or combinations thereof. The term "artificial edible coloring ingredients" refers to non-naturally occurring edible coloring ingredients or naturally occurring edible coloring ingredients which are chemically synthetized. Contrarily, the term "natural edible coloring ingredients" refers to naturally occurring artificial edible coloring ingredients which are not chemically synthetized. For avoidance of doubt, natural edible coloring ingredients include coloring foods, which are naturally-colored food ingredients. Examples of coloring foods include beet, blackcurrant, carrot, purple carrot, red cabbage, redcurrant, tomato and combinations thereof. The coloring food may be incorporated in the food product (before aeration) or in the aerated food product (after aeration) as a puree, as a juice or as a powder. The identity of the edible coloring ingredients and their content vary upon the targeted color, the targeted color intensity, the type of the edible plant paste, the pH, the fat content and the level of overrun of the aerated food product.

The aerated food product may comprise at least one thickener to improve the stability of the aerated food product. Examples of thickener include agar, gelatin, guar gum, locust bean gum, pectin, starch, xanthan gum and combinations thereof. Preferably, the aerated food product is substantially free of any thickener. More preferably, the aerated food product is entirely free of any thickener. Indeed, consumers better accept food products without thickeners. Such food products are perceived as "natural".

The aerated food product may comprise solid food inclusions to provide a contrasted texture to the aerated food product with crunchy or soft inclusions. The solid food inclusions may be crunchy solid food inclusions. Examples of crunchy solid food inclusions include almond, cashew nut, integral chickpea, hazelnut, macadamia nut, peanut, pecan nut, pine nut, pistachio, pumpkin seed, sunflower seed, walnut, watermelon seed and mixtures thereof. The solid food inclusions may be soft solid food inclusions. Examples of soft solid food inclusions include caper, caviar lime, date, dried apricot, grapes, passionfruit, pomegranate, prune, raisin, redcurrant and mixtures thereof. The solid food inclusions may be a mixture of crunchy solid food inclusions with juicy solid food inclusions. The type of solid food inclusions, their size and their content depend on the targeted crunchy, juicy or soft texture. The solid food inclusions are added after whipping in the aerated food product. They are not added in the food product before whipping because it may adversely affect the whipping step. In the presence of solid food inclusions, the overrun of the aerated food product is measured by using the previously presented formula:

$$OR = \left(\frac{Po}{Pf}\right) \times 100 - 100$$

Nevertheless, the measurement is performed on an isolated volume of the aerated food product which is free of any inclusions, called hereinafter the "isolated volume". The weight Pf is obtained by measuring the weight of a predetermined isolated volume Vi. The weight Po is obtained by measuring the weight of a same volume Vi of isolated volume after deaeration. For example, the isolated volume is deaerated by mixing.

The aerated food product may further be enriched with vitamins, minerals, fibers, prebiotics, probiotics and mixtures thereof.

In an embodiment, the aerated food product comprises a sesame seed paste in addition to the paste of another edible plant. The sesame seed paste is also commonly known as tahini. The sesame seed paste is an oleaginous vegetable paste having high total solids. Such a paste improves foaming properties and foam-stabilizing properties of the aerated food product. In this embodiment, the aerated food product comprises a sesame seed paste content ranging from 5wt% to 65wt%, preferably from 5wt% to 55wt%, more preferably from 5wt% to 45wt% or most preferably from 10wt% to 45wt%.

In a preferred embodiment, the aerated food product has a fat content ranging from 10vol% to 30vol%. Most preferably, the aerated food product has a fat content ranging from 10vol% to 20vol%. Due to its overrun, an aerated food product with a low fat content (i.e. a fat content below 30vol%) may be reached.

In another preferred embodiment, the aerated food product has a protein content from 5wt% to 8wt%. More preferably, the aerated food product has a protein content ranging from 5.5wt% to 8wt%.

In another preferred embodiment, the aerated food product has a fiber content ranging 2wt% to 4wt%. More preferably, the aerated food product has a fiber content ranging from 2wt% to 3.5wt%.

Preferably, the aerated food product may have the following nutritional composition:

- a fat content ranging from 10 vol% to 35vol%,
- a protein content ranging from 3wt% to 10wt%,
- a fibre content ranging from 2wt% to 5wt%.

In another embodiment, the aerated food remains stable over 30 days at 4°C. The term "stable over 30 days at 4°C" refers to an aerated food product essentially preserving its initial organoleptic and rheology features after a time of up to 30 days at a temperature of 4°C. More specifically, the aerated food product keeps the same texture and exhibits a limited loss of overrun, i.e. a loss of overrun below 20%, preferably below 10%, more preferably below 5% over shelf life. Furthermore, it exhibits no or limited syneresis or other foam destabilization clues (e.g. volume loss) after a time up to 30 days at a temperature of 4°C. Especially, the syneresis or other visual foam destabilization clues may be identified by a simple visual inspection of the aerated food product. For example, the syneresis is identified by the appearance of a liquid exuding from the aerated food product.

In a second aspect of the invention, the invention relates to a process for preparing an aerated food product as described hereinabove.

The process comprises a step of providing at least one edible plant paste as described in the first aspect of the invention.

After providing at least one edible plant paste, the edible plant paste may then optionally mixed with at least one ingredient selected among the group consisting of: aromatic herb, condiment, edible oil, emulsifier, fiber, flavour, flower essence, edible acidic ingredient, edible coloring ingredient, mineral, prebiotic, probiotic, salt, sesame seed paste, spice, sweetening ingredient, thickener, vitamin and combinations thereof. These ingredients are discussed above.

The mixing step may be performed by hand with a fork, a spoon or a whisk. The mixing step may also be performed with an electric mixing device. The electric mixing device may be a kitchen electric mixing device such as a hand mixer or a stand mixer. An example of stand mixer may be a KitchenAid® stand mixer. The electric mixing device may also be an industrial electric mixing device. An example of industrial electric mixing device is the MONDOMIX equipment. The mixing is performed to obtain a homogenous edible plant paste after the addition of the abovementioned ingredients.

After mixing, the edible plant paste is whipped to obtain an aerated food product which has an overrun ranging from 7% to 150%, preferably ranging from 7% to 100%. More preferably, the overrun of the aerated food ranges from 7% to 85% or from 7% to 60%. Most preferably, the overrun of the aerated food ranges from 7% to 50%, from 7% to 40%, from 7% to 35%, from 7% to 30% or from 10% to 30%. The whipping step is performed with an industrial electric mixing device. With kitchen mixing devices, including kitchen electric mixing devices, only overruns lower than 7% are reached. On the contrary, overruns ranging from 7% to 150% may be reached with industrial electric mixing devices. An example of an industrial mixing electric device is the MONDOMIX equipment. Another example of an industrial electric mixing device is a continuous in-line rotor-stator whipping device as disclosed in WO 2013/068426 A1 and WO 2017/067965 A1. Preferably, the whipping step is performed in a continuous in-line rotor-stator whipping device.

For instance, the whipping step with such a whipping device is performed by incorporating a neutral gas, such as nitrogen.

At the plant, working parameters of this whipping device include a rotation speed of 300 rpm to 1000 rpm, preferably from 400 rpm to 600 rpm; and a nitrogen flow rate of 90 L N2/h to 500 L N2/h, preferably from 100 L N2/h to 350 L N2/h, for a food product (product) flow rate of 500 kg/h to 1000 kg/h, preferably from 700 kg/h to 900 kg/h. The nitrogen flow rate is adapted to the food product flow rate, in order to inject enough gas to reach the target overrun. In an industrial setting, the nitrogen flow rate is adapted to a food product flow rate of, for instance, 800 kg/h to 1 ton/hour.

After whipping, the aerated food product may then optionally be mixed with at least one ingredient selected among the group consisting of aromatic herb, condiment, edible oil, emulsifier, fiber, flavour, flower essence, edible acidic ingredient, edible coloring ingredient, mineral, prebiotic, probiotic, salt, sesame seed paste, spice, sweetening ingredient, thickener, vitamin and combinations thereof. The mixing step may be performed by hand with a fork, a spoon or a whisk. The mixing step may also be performed with an electric mixing device. The electric mixing device may be a kitchen electric mixing device such as a hand mixer or a stand mixer. An example of stand mixer may be a KitchenAid® stand mixer. The electric mixing device may also be an industrial electric mixing device. An example of industrial electric mixing device is the MONDOMIX equipment. The mixing is performed in such a way that the decrease in overrun of the aerated food product is the lowest during mixing..

In a third aspect of the invention, the invention relates to a process for preparing an aerated food product as described in the first aspect of the invention.

The process comprises a step of providing at least one foamable ingredient. By foamable ingredient, it is understood an edible ingredient that is easily whipped into a foam having an overrun ranging from 50% to 200%, preferably ranging from 50% to 150% or ranging from 50% to 100%. The foamable ingredient is selected among the group consisting of aquafaba, casein concentrate, casein hydrolysate, casein isolate, milk protein concentrate, milk protein hydrolysate, milk protein isolate, plant protein concentrate, plant protein hydrolysate, plant protein isolate, whey proteins concentrate, whey protein hydrolysate, whey protein isolate, white egg, whole egg, yolk and mixtures thereof.

After providing at least one foamable ingredient, the foamable ingredient is thereafter whipped to obtain an aerated ingredient. The aerated ingredient has an overrun ranging from 5% to 200% or ranging from 7% to 150%. Preferably, the aerated ingredient has an overrun ranging from 7% to 100%, from 7% to 85% or from 7% to 60%. More preferably, the aerated ingredient has an overrun ranging from 7% to 50%, from 7% to 40% or from 7% to 35%. The whipping step may also be performed by hand with a whisk. The whipping step may be performed with an electric mixing device. The electric mixing device may be a kitchen electric mixing device such as a hand mixer or a stand mixer. An example of stand mixer may be a KitchenAid® stand mixer. The electric mixing device may also be an industrial electric mixing device. An example of an industrial electric mixing device is the MONDOMIX equipment. Another example of an industrial electric mixing device is a continuous in-line rotor-stator whipping device as previously described in the second aspect of the invention . Preferably, the whipping step is performed in a continuous in-line rotor-stator whipping device.

After whipping, the aerated ingredient is mixed with at least one edible plant paste to obtain an aerated food product which has an overrun ranging from 7% to 150%, preferably ranging from 7% to 100%. More preferably, the overrun of the aerated food ranges from 7% to 85% or from 7% to 60%. Most preferably, the overrun of the aerated food ranges from 7% to 50%, from 7% to 40%, from 7% to 35%, from 7% to 30% or from 10% to 30%. The mixing step may be performed by hand with a fork, a spoon or a whisk. The mixing step may also be performed with an electric mixing device. The electric mixing device may be a kitchen electric mixing device such as a hand mixer or a stand mixer. An example of stand mixer may be a KitchenAid® stand mixer. The electric mixing device may also be an industrial electric mixing device. An example of industrial electric mixing device is the MONDOMIX equipment. The mixing is performed in such a way that the decrease in overrun of the aerated ingredient is the lowest during mixing with the edible plant paste.

In a preferred embodiment, the edible plant paste is a vegetable plant paste as described in the first aspect of the invention.

After whipping, the aerated food product may then optionally be mixed with at least one ingredient as described in the second aspect of the invention. The mixing step may be performed by hand with a fork, a spoon or a whisk. The mixing step may be performed with a mixing device. The mixing device may be a kitchen mixing device such as a hand mixer or a stand mixer. An example of stand mixer may be a KitchenAid® stand mixer. The mixing device may be an industrial mixing device. An example of industrial mixing device is the MONDOMIX equipment. The mixing is performed in such a way that a minimum of air is incorporated. Preferably, the mixing is performed in such a way that no air is incorporated.

In a fourth aspect of the invention, the invention relates to a multilayer food product, at least one layer of which comprises an aerated food product according to the first aspect of the invention. The multilayer food product comprises at least two layers and at least one of the layers of the multilayer food product comprises an aerated food product according to the first aspect of the invention. The other layers may comprise any other type of food products. Examples of such food products include biscuit, cream, cottage cheese, coulis, fish, flan, fruit, jelly, meat, mousse, puree, seafood, vegetable and yogurt. Where there are several layers comprising an aerated food product according to the first aspect of the invention, such layers may comprise aerated food products having the same overrun or aerated food products having different overruns. In an advantageous embodiment, the multilayer food product comprises at least one layer consisting in an aerated food product according to the first aspect of the invention and at least one layer consisting in the same food product but which is not aerated. This embodiment has the advantage to provide a multilayer food product with contrasted textures with a single recipe.

Those skilled in the art will understand that they can freely combine all features of the present invention disclosed herein. In particular, features described for the product of the present invention may be combined with the use of the present invention and vice versa. Further, features described for different embodiments of the present invention may be combined. Further advantages and features of the present invention are apparent from the figures and non-limiting examples.

**EXAMPLES**

**Example 1: Aeration of hummus with a kitchen mixing device (KitchenAid ®)**

A high fat hummus (29vol% fat) was prepared by mixing the ingredients of Table 1.

Table 1

| Ingredients | wt% |
|---|---|
| Chickpea paste | 50.8 |
| Rapeseed oil | 21.5 |
| Sesame seed paste (Tahini) | 15.5 |
| Water | 10 |
| Salt | 1.0 |
| Citric acid | 0.56 |
| Spices | 0.4 |
| Potassium sorbate | 0.14 |

The nutritional composition of the high-fat hummus is disclosed in Table 2.

Table 2

| Nutritional feature | % |
|---|---|
| Fat content | 29vol% |
| Fibre content | 3wt% |
| Protein content | 6.5wt% |

A low-fat hummus (14.5vol% fat) was prepared by mixing the ingredients of table 3.

Table 3

| Ingredients | wt% |
|---|---|
| Chickpea paste (cooked chickpea, water, sodium carbonate) | 57 |
| Sesame seed paste | 23 |
| Water | 18 |
| Lactic acid | 1.1 |
| Salt | 0.9 |
| Potassium sorbate | 0.1 |

The nutritional composition of the low-fat hummus is disclosed in Table 4.

9

Table 4

| Nutritional feature | % |
|---|---|
| Fat content | 14.5vol% |
| Fibre content | 2.2wt% |
| Protein content | 8wt% |

Each hummus were whipped for 8 minutes with a KitchenAid® stand mixer. The overrun was then measured. Whipping parameters for each hummus and overruns obtained are presented in Table 5.

Table 5

| Hummus prototype | Whipping speed | Temperature | Overrun after whipping |
|---|---|---|---|
| Low-fat hummus | Speed 10 | 18°C | 5.4% |
| High-fat hummus | Speed 10 | 18°C | 4% |

With a kitchen whipping device, we can notice that hummus is a food matrix which is difficult to aerate. Only low overruns (below 6%) are reached and high overruns (above 7%) cannot be reached. Therefore, there is a challenge in obtaining innovative texture, such as foamy texture, for hummus by aeration with a kitchen mixing device.

**Example 2: Aeration of hummus with an industrial mixing device**

A low-fat hummus was prepared according to the recipe presented in Example 1(cf. tables 3 and 4).
Instead of whipping with a kitchen mixing device, the low-fat hummus was whipped with an industrial mixing device. The industrial mixing device used was a continuous in-line rotor-stator whipping device as disclosed in WO 2013/068426.
In this trial, the industrial mixing device contains three rotor/stator sets. In the first rotor/stator set, the gap width between two consecutive toothed rims of the rotor is of 5mm. Similarly, the gap width between two consecutive toothed rims of the stator is of 5mm. In the second rotor/stator set, the gap width between two consecutive toothed rims of the rotor is of 3mm and the gap width between two consecutive toothed rims of the stator is of 3mm. The third rotor/stator set has the same configuration than the second rotor/stator set (i.e. a gap width of 3mm in the rotor and in the stator).
After its preparation, the low-fat hummus was whipped in the industrial mixing device. For that, in a first trial, a hummus flow rate of 800kg/h, a nitrogen flow rate of 100L/h and a rotation speed of 500 rpm were used. After whipping, an aerated hummus having an overrun of 10% was obtained. The nutritional composition of the aerated hummus with an overrun of 10% is disclosed in table 6.

Table 6

| Nutritional feature | % |
|---|---|
| Fat content | 13.2vol% |
| Fibre content | 2.2wt% |
| Protein content | 8wt% |

A second trial was performed by using a hummus flow rate of 800kg/h, a nitrogen flow rate of 250L/h and a rotation speed of 500 rpm. After whipping, an aerated hummus having an overrun of 35% was obtained. The nutritional composition of the aerated hummus with an overrun of 35% is disclosed in table 7.

Table 7

| Nutritional feature | % |
|---|---|
| Fat content | 10.7vol% |
| Fibre content | 2.2wt% |
| Protein content | 8wt% |

**Example 3: Aerated confection (Almond paste and peanut paste)**

It would be possible to prepare an aerated confection comprising a mixture of an almond paste and a peanut paste.

For that purpose, a confection base containing a mixture of an almond paste and a peanut paste may be prepared by mixing the ingredients of Table 8.

Table 8

| Ingredients | wt% |
|---|---|
| Almond paste | 35 |
| Peanut paste | 13 |
| Honey | 7 |
| Fruit juice | 25 |
| Water | 21 |

The confection base may be then whipped with the industrial mixing device presented in example 3 and having the same configuration as in example 3. The whipping may be performed with a confection base flow rate of 800kg/h, a nitrogen flow rate of 250L/h and a rotation speed of 500 rpm.

After whipping, it is expected to obtain an aerated confection having an overrun ranging from 10 to 40%.

**Example 4: Aerated sweetened red bean paste**

It would be possible to prepare an aerated typical Japanese confection: Anko. Anko is a sweetened red bean paste which can be used as a filler for Japanese dessert such as dorayaki.

For that purpose, the anko may be prepared by mixing the ingredients of Table 9.

Table 9

| Ingredients | wt% |
|---|---|
| Red bean paste | 38 |
| Sugar | 62 |

The anko may be then whipped with the industrial mixing device presented in example 3 and having the same configuration as in example 3. The whipping may be performed with a anko flow rate of 800kg/h, a nitrogen flow rate of 250L/h and a rotation speed of 500 rpm.

After whipping, it is expected to obtain an aerated anko having an overrun ranging from 10 to 40%.

**Example 5: Aerated guacamole**

It would be possible to prepare an aerated guacamole. For that purpose, a guacamole may be prepared by mixing the ingredients of Table 10.

Table 10

| Ingredients | wt% |
|---|---|
| Avocado paste | 70 |
| Lemon juice | 15 |
| Olive oil | 10 |
| Spices | 5 |

The guacamole may be then whipped with the industrial mixing device presented in example 3 and having the same configuration as in example 3. The whipping may be performed with a guacamole flow rate of 800kg/h, a nitrogen flow rate of 250L/h and a rotation speed of 500 rpm.

After whipping, it is expected to obtain an aerated guacamole having an overrun ranging from 10 to 40%.

Although the invention has been described by way of example, it should be appreciated that variations and modifications may be made without departing from the scope of the invention as defined in the claims.

**Claims**

1. An aerated food product which comprises between 40wt% and 95wt% of at least one edible plant paste and which has an overrun ranging from 7% to 150%, wherein the edible plant paste is not a dry particulate or powder composition.

2. An aerated food product according to claim 1, wherein the edible plant paste is a vegetable paste.

3. An aerated food product according to claim 2, wherein the vegetable paste is a pulse paste or an oleaginous paste.

4. An aerated food product according to claim 2, wherein the vegetable paste consists of a mixture of at least one pulse paste and at least one oleaginous vegetable paste.

5. An aerated food product, according to any one of claims 1 to 4, which further comprises at least one of the following ingredients:

   - an edible oil
   - a spice, aromatic herb, condiment, flower essence and/or salt,
   - an edible acidic ingredient
   - an emulsifier.

6. An aerated food product according to any one of claims 1 to 5, which has the following nutritional composition:

   - a fat content ranging from 10 vol% to 35vol%,
   - a protein content ranging from 3wt% to 10wt%,
   - a fibre content ranging from 2wt% to 5wt%.

7. An aerated food product according to any one of claims 1 to 6, which remains stable over 30 days at 4°C.

8. A process for preparing an aerated food product according to any one of claims 1 to 7, which comprises the steps of:

   (a) providing between 40wt% and 95wt% of at least one edible plant paste, wherein the edible plant paste is not a dry particulate or powder composition,
   (b) whipping the edible plant paste to obtain an aerated food product which has an overrun ranging from 7% to 150%.

9. A process for preparing an aerated food product according to any one of claims 1 to 7 which comprises the steps of:

   (a') providing at least one foamable ingredient,
   (b') whipping the foamable ingredient to obtain an aerated ingredient,
   (c') mixing the aerated ingredient with an edible plant paste to obtain an aerated food product which has an overrun ranging from 7% to 150%.

10. A process for preparing an aerated food product according to claim 9, wherein the foamable ingredient is selected from the group consisting of: aquafaba, casein concentrate, casein hydrolysate, casein isolate, milk protein concentrate, milk protein hydrolysate, milk protein isolate, plant protein concentrate, plant protein hydrolysate, plant protein isolate, whey proteins concentrate, whey protein hydrolysate, whey protein isolate, white egg and mixtures thereof.

11. A process for preparing an aerated food product according to any one of claims 8 to 10, wherein the edible plant paste is a vegetable paste.

12. A process for preparing an aerated food product according to claim 11, wherein the edible plant paste is a pulse paste or an oleaginous paste.

13. A process for preparing an aerated food product according to claim 11, wherein the edible plant paste consists of a mixture of at least one pulse paste and at least one oleaginous vegetable paste.

14. A multilayer food product, at least one layer of which comprises an aerated food product according to any one of the claims 1 to 7.


**Patentansprüche**

1. Mit Luft durchsetztes Lebensmittelprodukt, das zwischen 40 Gew.-% und 95 Gew.-% mindestens eine essbare Pflanzenpaste umfasst und das einen Lufteinschlag im Bereich von 7 % bis 150 % aufweist, wobei die essbare Pflanzenpaste keine trockene Partikel- oder Pulverzusammensetzung ist.

2. Mit Luft durchsetztes Lebensmittelprodukt nach Anspruch 1, wobei die essbare Pflanzenpaste eine Gemüsepaste ist.

3. Mit Luft durchsetztes Lebensmittelprodukt nach Anspruch 2, wobei die Gemüsepaste eine Hülsenfruchtpaste oder eine Ölfruchtpaste ist.

4. Mit Luft durchsetztes Lebensmittelprodukt nach Anspruch 2, wobei die Gemüsepaste aus einer Mischung von mindestens einer Hülsenfruchtpaste und mindestens einer Ölfruchtpaste besteht.

5. Mit Luft durchsetztes Lebensmittelprodukt nach einem der Ansprüche 1 bis 4, das ferner mindestens einen der folgenden Inhaltsstoffe umfasst:

   - ein Speiseöl
   - ein Gewürz, ein aromatisches Kraut, ein Würzmittel, eine Blumenessenz und/oder Salz,
   - einen essbaren sauren Inhaltsstoff
   - einen Emulgator.

6. Mit Luft durchsetztes Lebensmittelprodukt nach einem der Ansprüche 1 bis 5, das die folgende Nährstoffzusammensetzung aufweist:

   - einen Fettgehalt im Bereich von 10 Vol.-% bis 35 Vol.-%,
   - einen Proteingehalt im Bereich von 3 Gew.-% bis 10 Gew.-%,
   - einen Ballaststoffgehalt im Bereich von 2 Gew.-% bis 5 Gew.-%.

7. Mit Luft durchsetztes Lebensmittelprodukt nach einem der Ansprüche 1 bis 6, das über 30 Tage bei 4 °C stabil bleibt.

8. Verfahren zum Herstellen eines mit Luft durchsetzten Lebensmittelprodukts nach einem der Ansprüche 1 bis 7, das die folgenden Schritte umfasst:

   (a) Bereitstellen zwischen 40 Gew.-% und 95 Gew.-% mindestens einer essbaren Pflanzenpaste, wobei die essbare Pflanzenpaste keine trockene Partikel- oder Pulverzusammensetzung ist,
   (b) Aufschlagen der essbaren Pflanzenpaste, um ein mit Luft durchsetztes Lebensmittelprodukt zu erhalten, das einen Lufteinschlag im Bereich von 7 % bis 150 % aufweist.

9. Verfahren zum Herstellen eines mit Luft durchsetzten Lebensmittelprodukts nach einem der Ansprüche 1 bis 7, das die folgenden Schritte umfasst:

   (a') Bereitstellen mindestens eines aufschäumbaren Inhaltsstoffs,
   (b') Aufschlagen des aufschäumbaren Inhaltsstoffs, um einen mit Luft durchsetzten Inhaltsstoff zu erhalten,
   (c') Mischen des mit Luft durchsetzten Inhaltsstoffs mit einer essbaren Pflanzenpaste, um ein mit Luft durchsetztes Lebensmittelprodukt zu erhalten, das einen Lufteinschlag im Bereich von 7 % bis 150 % aufweist.

10. Verfahren zum Herstellen eines mit Luft durchsetzten Lebensmittelprodukts nach Anspruch 9, wobei der aufschäumbare Inhaltsstoff ausgewählt ist aus der Gruppe bestehend aus: Aquafaba, Caseinkonzentrat, Caseinhydrolysat, Caseinisolat, Milchproteinkonzentrat, Milchproteinhydrolysat, Milchproteinisolat, Pflanzenproteinkonzentrat, Pflanzenproteinhydrolysat, Pflanzenproteinisolat, Molkenproteinkonzentrat, Molkenproteinhydrolysat, Molkenproteinisolat, Weißei und Mischungen davon.

11. Verfahren zum Herstellen eines mit Luft durchsetzten Lebensmittelprodukts nach einem der Ansprüche 8 bis 10, wobei die essbare Pflanzenpaste eine Gemüsepaste ist.

12. Verfahren zum Herstellen eines mit Luft durchsetzten Lebensmittelprodukts nach Anspruch 11, wobei die essbare Pflanzenpaste eine Hülsenfruchtpaste oder eine Ölfruchtpaste ist.

13. Verfahren zum Herstellen eines mit Luft durchsetzten Lebensmittelprodukts nach Anspruch 11, wobei die essbare Pflanzenpaste aus einer Mischung von mindestens einer Hülsenfruchtpaste und mindestens einer Ölfruchtpaste besteht.

14. Mehrschichtiges Lebensmittelprodukt, von dem mindestens eine Schicht ein mit Luft durchsetztes Lebensmittelprodukt nach einem der Ansprüche 1 bis 7 umfasst.


**Revendications**

1. Produit alimentaire aéré qui comprend entre 40 % en poids et 95 % en poids d'au moins une pâte de plante comestible et qui a un foisonnement allant de 7 % à 150 %, dans lequel la pâte de plante comestible n'est pas une composition particulaire sèche ou en poudre.

2. Produit alimentaire aéré selon la revendication 1, dans lequel la pâte de plante comestible est une pâte végétale.

3. Produit alimentaire aéré selon la revendication 2, dans lequel la pâte végétale est une pâte de légumineuse ou une pâte d'oléagineux.

4. Produit alimentaire aéré selon la revendication 2, dans lequel la pâte végétale est constituée d'un mélange d'au moins une pâte de légumineuse et d'au moins une pâte végétale d'oléagineux.

5. Produit alimentaire aéré, selon l'une quelconque des revendications 1 à 4, qui comprend en outre au moins un des ingrédients suivants :

   - une huile comestible
   - une épice, une herbe aromatique, un condiment, une essence florale et/ou du sel,
   - un ingrédient acide comestible
   - un émulsifiant.

6. Produit alimentaire aéré selon l'une quelconque des revendications 1 à 5, qui a la composition nutritionnelle suivante :

   - une teneur en matières grasses allant de 10 % en volume à 35 % en volume,
   - une teneur en protéines allant de 3 % en poids à 10 % en poids,
   - une teneur en fibres allant de 2 % en poids à 5 % en poids.

7. Produit alimentaire aéré selon l'une quelconque des revendications 1 à 6, qui reste stable pendant 30 jours à 4 °C.

8. Procédé de préparation d'un produit alimentaire aéré selon l'une quelconque des revendications 1 à 7, qui comprend les étapes consistant à :

   (a) fournir entre 40 % en poids et 95 % en poids d'au moins une pâte de plante comestible, dans lequel la pâte de plante comestible n'est pas une composition particulaire sèche ou en poudre,
   (b) fouetter la pâte de plante comestible pour obtenir un produit alimentaire aéré qui a un foisonnement allant de 7 % à 150 %.

9. Procédé de préparation d'un produit alimentaire aéré selon l'une quelconque des revendications 1 à 7 qui comprend les étapes consistant à :

(a') fournir au moins un ingrédient pouvant mousser,

(b') fouetter l'ingrédient pouvant mousser pour obtenir un ingrédient aéré,

(c') mélanger l'ingrédient aéré avec une pâte de plante comestible pour obtenir un produit alimentaire aéré qui a un foisonnement allant de 7 % à 150 %.

10. Procédé de préparation d'un produit alimentaire aéré selon la revendication 9, dans lequel l'ingrédient pouvant mousser est choisi dans le groupe constitué de : aquafaba, concentré de caséine, hydrolysat de caséine, isolat de caséine, concentré de protéines de lait, hydrolysat de protéines de lait, isolat de protéines de lait, concentré de protéines de plantes, hydrolysat de protéines de plantes, isolat de protéines de plantes, concentré de protéines lactosériques, hydrolysat de protéines lactosériques, isolat de protéines lactosériques, blanc d'oeuf et mélanges de ceux-ci.

11. Procédé de préparation d'un produit alimentaire aéré selon l'une quelconque des revendications 8 à 10, dans lequel la pâte de plante comestible est une pâte végétale.

12. Procédé de préparation d'un produit alimentaire aéré selon la revendication 11, dans lequel la pâte de plante comestible est une pâte de légumineuse ou une pâte d'oléagineux.

13. Procédé de préparation d'un produit alimentaire aéré selon la revendication 11, dans lequel la pâte de plante comestible est constituée d'un mélange d'au moins une pâte de légumineuse et d'au moins une pâte végétale d'oléagineux.

14. Produit alimentaire multicouche, dont au moins une couche comprend un produit alimentaire aéré selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2745702 A1
- WO 2017211635 A1
- WO 2017147059 A1
- WO 2016062567 A1
- US 2018027854 A
- US 2011020527 A
- WO 2013068426 A1
- WO 2017067965 A1
- WO 2013068426 A